# EUROPEAN PATENT APPLICATION

(11) **EP 4 442 610 A1**
(43) Date of publication of application: **09.10.2024**
(21) Application number: 23166552.2
(22) Date of filing: 04.04.2023
(51) Int. Cl.: B65G 1/04

(54) **AN AUTOMATED WAREHOUSE**

(71) Applicant: MOVU, 9160 Lokeren (BE)
(72) Inventor: Tacq, Andries, 8700 Tielt (BE)
(74) Representative: IP HILLS NV

(57) **Abstract**

An automated warehouse is provided, the warehouse comprising at least one shuttle to transport payload in a racking system of the automated warehouse, wherein said racking system comprises at least one pick-up station adapted to have said at least one shuttle being taken out and provided to the racking system by means of an autonomous mobile robot and/or an autonomous guided vehicle.

## Description

### Field of the Invention

The present invention generally relates to automated warehouses, in particularly automated warehouses comprising at least one shuttle to transport payload in the racking system of the system. The present invention relates in particular also to methods to move shuttles within and/or into and/or out of such automated warehouses and/or in between automated warehouses and/or from a warehouse to a different area, e.g. a maintenance area, or dedicated parking spots.

### Background of the Invention

Automated warehouses and automated warehouse shuttle systems are generally known. Warehouses may include relatively large storage structures, generally structured along a plurality of substantially parallel lanes. The storage structures are arranged to provide storage locations to goods, often palettized goods. These storage locations may be provided on a plurality of levels within the storage structure. In order to automate delivery and pick up of goods to and from said storage locations, automated warehouses can include an automated warehouse shuttle system. Said shuttle systems generally include a track system including at least one pair of rails arranged in a substantially horizontal plane along a lane of the warehouse, or more generally speaking, at least one pair of rails along each of the lanes of the warehouse, which are generally arranged substantially in parallel to each other, and more preferably, a pair of rails per level and per lane of the warehouse. Transverse aisles may connect said substantially parallel lanes, which transverse lanes may or may not be provided with tracks. The system further includes warehouse shuttles, in particular mobile robots, which are configured to move along said tracks, and which are configured to transport goods and/or goods carriers to and from said storage locations in the storage structure. An automated shuttles system can comprise a plurality of automated shuttles which are often integrated into, and controlled by, a central warehouse management control system.

### Summary of the Invention

It is the object of the present invention to provide automated warehouses in which the transfer of a shuttle from or to the automated warehouse is facilitated. It is also an object of the present invention to provide methods to transfer of a shuttle between an automated warehouses and other areas, e.g. maintenance area, or dedicated parking spots.

In an automated warehouse according to the invention, the transfer will hence take place by an AMR or AGV. According to a first aspect of the invention, an automated warehouse is provided, the warehouse comprising at least one shuttle to transport payload in a racking system of the automated warehouse, wherein said racking system comprises at least one pick-up station adapted to have said at least one shuttle being taken out and provided to the racking system by means of an autonomous mobile robot and/or an autonomous guided vehicle.

An autonomous mobile robot (also referred to as AMR) is a type of robot that can move through its environment without being overseen directly by an operator or limited to a fixed, predetermined path.

An autonomous guided vehicle (also referred to as AGV) is a type of robot that can move through its environment without being overseen directly by an operator or limited to a fixed, predetermined path and is mostly seen as a forklift which is automated. It has the ability to bring one, 2 or more forks from floor level to a predefined height.

The automated warehouse according to the invention has the advantage that the shuttles may be moved easily and without interference by an operator to and from another zone, like a maintenance zone, outside the system. Though the shuttles can operate and move within this system, the shuttles cannot move autonomously outside the system on the concrete floor. The shuttles are not foreseen with the necessary safety equipment to travel outside the system. When the automated warehouse is rather complex or wide in structure, and comprises more than one pick-up stations adapted to have said at least shuttle being taken out and provided to the racking system by means of an AMR, the AMR may be used to bring the shuttle from one of these pick-up stations to another pick-up station. An AMR may bring a shuttle even from one automated warehouse to another automated warehouse, in case both automated warehouses are automated warehouses according to the present invention.

As an example, when the racking system comprises more than one lane of racking, shuttles having not the possibility to travel autonomously from one racking lane to another racking lane, and each racking lane comprising at least one pick-up station, one racking lane may have the need for an additional shuttle to perform the storage activity in this racking lane. The AMR may bring a shuttle to this racking lane. Similarly when too many shuttles are operating in one racking lane, the AMR may remove one shuttle from this racking lane when appropriate.

As another example, because the shuttle needs preventive maintenance at regular times, the shuttles have to be either maintained within the system, which is cumbersome and complicated and disturbs normal operation in the warehouse, or the shuttle is to be brought to a maintenance zone outside the system. In this case the shuttles need to be moved outside the system by other means, which requires an action taken by a human. Such human intervention is rather difficult, even problematic to be included in a fully automated system.

The use of AMR's according to the invention to commute the shuttles to and from the racking system, between racking lanes, between automated warehouses, or to and from the maintenance zone or zones to an automated warehouse, or a dedicated parking spot outside the automated warehouse, allows to decrease the number of human interventions, and may increase the efficiency of these interventions, e.g. interventions due to preventive maintenances. The transfer to and from the system of the shuttle to be taken out, e.g. maintained or loaded in the system e.g. after having been maintained, can be integrated and calculated in the automation of the whole system.

The at least one pick-up station may be adapted to have at least one shuttle being taken out and provided to the racking system by means of an autonomous mobile robot, but may be adapted to have more than one shuttle simultaneously being taken out and provided to the racking system by means of an autonomous mobile robot. Hence the pick-up station may store one shuttle, or may be able to store more than one shuttles simultaneously.

The at least one pick-up station is to be adapted to allow the AMR to pick up the shuttle or shuttles. Preferably the shuttle can be driven, automatically, to the pick-up station, where its lower surface, and the possible wheels used to drive the shuttle, are at an elevated position in view of the surface on which the AMR is driven. The AMR can be manoeuvred such it can receive, optionally lift the shuttle and take it from the pick-up station or station.

The pick-up station can be dedicated to the racking system, or may be removeable from the rack, and stored elsewhere when not in use. The AMR or AGV may take the removeable pick-up station and bring it to the racking system of said warehouse to pick up the shuttle or shuttles. Hence the AMR or AGV may be enabled to fulfil other tasks, without the pickings station attached to it, as well as bringing the removeable pick-up system to or from the racking system, and moving of a shuttle or shuttles.

The pick-up station may be provided with one or more backstops in the warehouse. This backstop, once provided to the racking system of the warehouse, avoids a shuttle to move to the position where a pick-up system is to be provided.. When no pickup station is present, the backstop avoids a shuttle to drive outside the automated warehouse. The backstop maybe an activatable backstop being part of the racking system, or may be a removeable backstop, to be installed at the position where a removeable pick-up station is to be provided to the racking system. The removeable backstop maybe transported and provided to the racking system, optionally by an AMR or an AGV. The backstop may be a device activated electrically, pneumatic, or hydraulic or mechanically. The backstop may be a device that uses the wheel or motion from the shuttle itself. the backstop may be activated or deactivated by the AMR or pick-up station to activate the backstop, enabling any shuttle to drive onto the pick-up station.

According to some embodiments, the pick-up station may comprise a shuttle support means having a shuttle support surface at a level different from ground level, said shuttle support surface is free of obstructions at the traverse side of the shuttle support means oriented outwards the automated warehouse.

The absence of any obstacle at this traverse side of the shuttle support surface provides the shuttle support surface to be adapted to enable the shuttle to move from the shuttle support surface in longitudinal direction of the shuttle. The AMR may be positioned in front of the traverse side of the shuttle support means oriented outwards the automated warehouse, such the load platform of the AMR is substantially flush with the shuttle support surface. When the AMR is positioned in front of this traverse side of the shuttle support means, the shuttle may drive from the shuttle support surface, onto the load platform of the AMR. Obviously this action may also be done in the other direction, i.e. the shuttle carried by the AMR on its load platform, may drive onto the shuttle support surface of the shuttle support means, when the AMR is positioned in front of this traverse side of the shuttle support means. As such the AMR may bring a shuttle into, or may remove a shuttle from the automated warehouse.

The shuttle support means having a shuttle support surface may be large enough to support and store more than one shuttle, e.g. one after the other in the longitudinal direction of the shuttles. The shuttle support means having a shuttle support surface may be large enough to support and store 2, 3, 4, 5 or even more shuttles , e.g. in a row.

According to some embodiments, the shuttle support surface may comprise two support strips in longitudinal direction of the shuttle to be supported, the first support strip being positioned along the first longitudinal side of the shuttle to be supported, the second support strip being positioned along the second longitudinal side of the shuttle to be supported, between the two support strips, an open space is provided.

The two support strips are adapted to support the driving means, like wheels, present along the longitudinal sides of the shuttle, which wheels allow them to move in the automated warehouse in horizontal, vertical and/or any other direction. The AMR may be positioned in front of the traverse side of the shuttle support means oriented outwards the automated warehouse, such the load platform of the AMR is substantially flush with the two support strips. When the AMR is positioned in front of this traverse side of the shuttle support means, the shuttle may drive from the two strips onto the load platform of the AMR. Obviously this action may also be done in the other direction, i.e. the shuttle carried by the AMR on its load platform, may drive onto the two support strips of the shuttle support means, when the AMR is positioned in front of this traverse side of the shuttle support means. As such the AMR may bring a shuttle into, or may remove a shuttle from the automated warehouse.

The support strips may have a profiled cross section, the cross section having a first flank adapted to receive and carry the shuttle, the cross section having a second flank oriented upwards in view of the first flank. As such the shuttle moving on the support strips, may be prevented to deviate from its driving direction towards one of the sides of the shuttle support means, thereby being in a possibility to drop of the shuttle support means.

Each shuttle support strip may be provided along the whole longitudinal length of the pick-up station, i.e. extend from the traverse side of the shuttle support means oriented outwards the automated warehouse to the traverse side of the shuttle support means oriented inwards the automated warehouse.

According to some embodiments, the pick-up station may comprise a skid to carry at least one shuttle in the pick-up station and during transportation by the AMR.

The skid, which hence may be taken in or out of the pick-up station along with the shuttle, is adapted to receive the shuttle coming from the racking of the automated warehouse.

The skid may be large enough to support and store more than one shuttle, e.g. one after the other in the longitudinal direction of the skid. The skid may be large enough to support and store 2, 3, 4, 5 or even more shuttles , e.g. in a row.

According to some embodiments, the pick-up station may comprise a skid support means adapted support the skid.

This skid support may e.g.be at least two pairs of fingers or projections oriented inwards the pick-up station, e.g. substantially horizontal inwards the pick-up station. One pair may be positioned at one of the longitudinal sides of the skid support means, to support one of the longitudinal sides of the skid, the other pair being positioned at the other of the longitudinal sides of the skid support means, to support the other of the longitudinal sides of the skid. At each longitudinal side, more than two, e.g. 3, 4, 5, 6, 7, 8, 9 or even more fingers or projections oriented inwards the pick-up station may be provided to support the longitudinal sides of the skid. All fingers or protrusions may be substantially coplanar at their side oriented upwards. Alternatively, two skid support strips may be provided, each skid support strip being in longitudinal direction of the skid to be supported. The first support strip may be positioned along the first longitudinal side of the skid to be supported; the second skid support strip may be positioned along the second longitudinal side of the skid to be supported. Each skid support strip may be provided along the whole longitudinal length of the pick-up station, i.e. extend from the traverse side of the skid support means oriented outwards the automated warehouse to the traverse side of the skid support means oriented inwards the automated warehouse.

According to some embodiments, the skid may comprise a frame with an upper side, the frame comprising two rails on its upper side, one rail at each of the longitudinal side of the frame adapted to have the shuttle moving to and from the skid when contacting these rails.

According to some embodiments, the rails may have a profiled cross section, the cross section having a first flank adapted to receive and carry the shuttle, the cross section having a second flank oriented upwards in view of the first flank.

The second flank prevents the shuttle to move in a direction different from the longitudinal direction. This longitudinal direction is the direction in which the shuttle moves ton and off the frame of the skid. As such the shuttle moving on the skid, may be prevented to drop sideways of the skid.

The shuttle may have a wheelbase and driving wheels to propel the shuttle in the automated warehouse. The width of the two second flanks may be wider than the width of the wheelbase and the driving wheels of the shuttle.

According to some embodiments, the rails may be positioned substantially coplanar with at least one horizontal track in the automated warehouse.

By moving the shuttle to the pick-up station by means of this at least one horizontal track in the automated warehouse, the shuttle can pass onto the rail of the frame of the skid, in order to enable the AMR to pick-up the shuttle.

According to some embodiments, the skid may comprise a movement restriction means to prevent the shuttle to pass beyond the transverse side of the skid being furthest remote from the automated warehouse.

This movement restriction means may be any obstacle, like a plate or block, being provided to the rails at the end of the rail being furthest remote from the automated warehouse when the skid is positioned in the pick-up station.

The movement restriction means may be moveable itself, i.e. may be adapted to be removed, like being brought to a first position where it restricts the passing of the shuttle, and a second position in which passing of the shuttle along the rails is enabled. The movement restriction means may be controlled by a controller and may comprise a driving means to bring the movement restriction means from the first in the second position and vice versa.

Possibly the skid comprises a first and a second movement restriction means, the first said skid comprises a movement restriction means to prevent the shuttle to pass beyond a first of the two transverse sides of the skid, the second movement restriction means to prevent the shuttle to pass beyond the second of the two transverse sides of the skid. Both movement restriction means may be moveable e.g. adapted to be brought to a first position where it restricts the passing of the shuttle, and a second position in which passing of the shuttle along the rails is enabled. Both movement restriction means may be controlled by a controller and may comprise a driving means to bring the movement restriction means from the first in the second position and vice versa

When a shuttle is positioned on the skid, the two movement restriction means may prevent the shuttle to pass beyond the transverse sides of the skid when positioned in their first position. As such, the shuttle is prevented to fall from the skid, hence from the AMR during movement of the AMR.

The at least one pick-up station may be to be adapted to allow the AMR to pick up the shuttle or shuttles. Preferably this means that amongst others a void space is to be present under the pick-up station to allow the AMR to move under the shuttle. The shuttle can be driven, automatically, to the pick-up station, where its lower surface, and the possible wheels used to drive the shuttle, are at an elevated position in view of the surface on which the AMR is driven. The AMR can be manoeuvred such it can lift the shuttle and take it from the pick-up station or station.

According to some embodiments, the pick-up station may comprise a void volume under the shuttle support surface or the skid support surface, said void volume at the traverse side of the void volume oriented outwards the automated warehouse is free of obstructions.

As such, the void volume has an one open side at its traverse side oriented outwards the automated warehouse, thereby enabling the AMR or AGV to enter the pick-up station The shuttle having entered the pick-up station, can be supported by the shuttle supporting means while awaiting the AMR or AGV. The AMR or AGV can enter the pick-up station via the open side. The AMR or AGV can move under the shuttle and under the shuttle support means. An AMR having a load carrying platform which can be lifted, may lift its load carrying platform and lift the shuttle from the shuttle support means. Once lifted from the shuttle support means, the AMR carrying the shuttle can leave the pick-up station via the open side.

Alternatively, the void volume has an open side at its traverse side oriented outwards the automated warehouse, thereby enabling the AMR or AGV to enter the pick-up station. The shuttle having entered the pick-up station on a skid, can be supported by the skid, itself being supported on the skid supporting means while awaiting the AMR or AGV. The AMR or AGV can enter the pick-up station via the open side. The AMR can move under the shuttle, under the skid and under the skid support means. The AMR having a load carrying platform which can be lifted, may lift its load carrying platform and lift the skid with the shuttle from the skid support means. Once lifted from the shuttle support means, the AMR carrying the shuttle on the skid, can leave the pick-up station via the open side.

According to a second aspect of the invention, a skid for carrying a shuttle of an automated warehouse on an AMR or AGV is provided. The skid comprises a frame with an upper side. The frame comprises two rails on its upper side, one rail at each of the longitudinal side of the frame adapted to have the shuttle moving to and from the skid when contacting these rails. The skid may be large enough to support and store more than one shuttle, e.g. one after the other in the longitudinal direction of the shuttles. The skid may be large enough to support and store 2, 3, 4, 5 or even more shuttles , e.g. in a row.

The rails may have a profiled cross section, the cross section having a first flank adapted to receive and carry the shuttle, the cross section having a second flank oriented upwards in view of the first flank.

The second flank prevents the shuttle to move in a direction different from the longitudinal direction. This longitudinal direction is the direction in which the shuttle moves ton and off the frame of the skid.

The shuttle may have a wheelbase and driving wheels to propel the shuttle in the automated warehouse. The width of the two second flanks may be wider than the width of the wheelbase and the driving wheels of the shuttle.

The rails may be positioned substantially coplanar with at least one horizontal track in the automated warehouse.

By moving the shuttle to the pick-up station by means of this at least one horizontal track in the automated warehouse, the shuttle can pass onto the rail of the frame of the skid, in order to enable the AMR or AGV to pick-up the shuttle.

The skid may comprise a movement restriction means to prevent the shuttle to pass beyond the transverse side of the skid being furthest remote from the automated warehouse. Possibly the skid comprises a first and a second, possibly identical movement restriction means, the first said skid comprises a movement restriction means to prevent the shuttle to pass beyond a first of the two transverse sides of the skid, the second movement restriction means to prevent the shuttle to pass beyond the second of the two transverse sides of the skid. Both movement restriction means may be moveable e.g. adapted to be brought to a first position where it restricts the passing of the shuttle, and a second position in which passing of the shuttle along the rails is enabled. Both movement restriction means may be controlled by a controller and may comprise a driving means to bring the movement restriction means from the first in the second position and vice versa

This movement restriction means may be any obstacle, like a plate or block, being provided to the rails at the end of the rail being furthest remote from the automated warehouse when the skid is positioned in the pick-up station.

The movement restriction means may be moveable itself, i.e. may be adapted to be removed, like being brought to a first position where it restricts the passing of the shuttle, and a second position in which passing of the shuttle along the rails is enabled. The movement restriction means may be controlled by a controller and may comprise a driving means to bring the movement restriction means from the first in the second position and vice versa.

When a shuttle is positioned on the skid, the two movement restriction means may prevent the shuttle to pass beyond the transverse sides of the skid when positioned in their first position. As such, the shuttle is prevented to fall from the skid, hence from the AMR or AGV during movement of the AMR or AGV.

According to further embodiments of the automated warehouse according to the first aspect of the present invention, the automated warehouse further comprises at least one AMR adapted to carry at least one shuttle of an automated warehouse.

According to some embodiments, the automated warehouse comprises an autonomous mobile robot and/or an autonomous guided vehicle, said robot and/or vehicle comprising a skid, said skid comprising a frame with an upper side, said frame comprising two rails on its upper side, one rail at each of the longitudinal side of the frame adapted to have a shuttle moving to and from the skid when contacting said rails.

The skid may be a skid according to the second aspect of the invention.

According to a third aspect of the invention, an AMR is provided, the AMR comprising a skid according to the second aspect of the invention, hence a skid adapted to carry a shuttle of an automated warehouse. Next to carry shuttles by the skid, the AMR may be used for carrying other devices or objects.

According to a fourth aspect of the invention, an AGV is provided, the AGV comprising a skid according to the second aspect of the invention, hence a skid adapted to carry a shuttle of an automated warehouse. Next to carry shuttles by the skid, the AGV may be used for carrying other devices or objects.

According to some embodiments, the autonomous mobile robot or the autonomous guided vehicle may comprise a skid, said skid comprising a frame with an upper side, said frame comprising two rails on its upper side, one rail at each of the longitudinal side of the frame adapted to have a shuttle moving to and from the skid when contacting said rails. The skid may be a skid according to the second aspect of the invention.

According to a fifth aspect of the invention, a method to transfer a shuttle from an automated warehouse is provided, the method comprises:
- providing an automated warehouse according to the first aspect of the invention;
- drive an AMR or AGV into the pick-up station;
- exchange a shuttle between the AMR or AGV and the pick-up station;
- drive the AMR out of the pick-up station.

Exchange a shuttle between the AMR or AGV and the pick-up station may mean loading or unloading a shuttle on of from the AMR or AGV.

More than one shuttle may be exchanged, i.e. loaded or unloaded to or from the AMR or AGV to the pick-up position.

Hence according to some embodiments, the method may comprise
- providing an automated warehouse according to the first aspect of the invention;
- drive a shuttle and an AMR or AGV into the pick-up station;
- load the shuttle on the AMR or AGV;
- drive the AMR or AGV out of the pick-up station.

According to some embodiments, the method may comprise
- providing an automated warehouse according to the first aspect of the invention;
- drive an AMR or AGV loaded with a shuttle into the pick-up station;
- unload the shuttle from the AMR or AGV;
- drive both the AMR or AGV and the shuttle out of the pick-up station.

According to these methods, the AMR or AGV can take one or more shuttles, even one or more shuttles at one time, from the automated warehouse, without a human intervention being necessary. The automated warehouse traffic management system, which controls the movements of shuttles and goods in the automated warehouse, may conduct one, or more than one if necessary and possible, shuttles to a pick-up station of the warehouse. Once arrived, this or these shuttles can be removed out of the pick-up station onto the AMR or AGV, and be taken to the intended position, either being another position in the same automated warehouse, to another automated warehouse, to a maintenance zone for maintaining the shuttle or shuttles, or to another place appropriate. The AMR or AGV or the shuttle may communicate with the automated warehouse traffic management system that the shuttle is removed from the pick-up station.

Similarly, the AMR or AGV can bring one or more shuttles, even one or more shuttles at one time, to the automated warehouse, without a human intervention being necessary. The automated warehouse traffic management system, which controls the movements of shuttles and goods in the automated warehouse, may inform the shuttle, shuttles and/or the AMR or AGV that one, or more than one if necessary and possible, shuttles may be brought to a pick-up station of the warehouse. This pick-up station is preferably empty at that moment. Once arrived, this or these shuttles can be loaded in the pick-up station from the AMR or AGV. The AMR or AGV or the shuttle may communicate with the automated warehouse traffic management system that the shuttle or shuttles are present in the pick-up station and possibly that they are ready to be taken back into the operation of the automated warehouse.

According to a sixth aspect of the invention, a method to transfer a shuttle to an automated warehouse, the method comprises
- providing an automated warehouse according to the first aspect of the invention;
- providing an AMR according to the third aspect of the invention;
- drive said AMR in front of the pick-up station such a shuttle is in a position to be loaded or unloaded to or from the skid on the AMR; and
- load or unload the shuttle to or from the skid on the AMR.

Preferably a skid is used to carry the shuttle on the AMR and in the pick-up station. Possibly the skid is oriented in the pick-up station such that the skid has a first traverse side oriented inwards the pick-up station. The shuttle enters on the skid via this traverse side. Possibly a movement restriction means is blocking the shuttle to pass the second, opposite transverse side of the skid. After the shuttle is positioned in the skid, a moveable movement restriction means may be brought in position to block the shuttle to pass the first traverse side of the skid.

The AMR may bring the shuttle to a remote position where the shuttle is potentially unloaded from the skid, or the skid is unloaded from the AMR, while the shuttle stays on the skid. The skid may be removed from the AMR. Optionally, the shuttle is driven from the skid. This may be done via either the first or second traverse side of the skid. In case a movement restriction means is blocking the shuttle to pass the transverse side of the skid via which the shuttle is to be driven from the skid, the moveable movement restriction means may be brought in position to allow the shuttle to pass this traverse side of the skid.

In a similar way, the shuttle may be put on or driven a skid being remote from the automated warehouse. The shuttle optionally being limited in movement by means of possibly moveable movement restriction means, may be taken by an AMR, which drives the shuttle, optionally on the skid, to the pick-up position of the automated warehouse. The skid is positioned in the pick-up station, where the shuttle may be driven from the skid into the warehouse. The AMR may select the traverse side of the skit being positioned inwards the pick-up station. This is in particularly advantageous when the skid has two substantially identical traverse sides, both optionally being provided with a moveable movement restriction means.

According to a seventh aspect of the invention, a method according to the fifth or sixth aspect of the invention is used for transferring a shuttle between a first automated warehouse and a maintenance zone, a second automated warehouse or a remote place from the first automated warehouse, or to move a shuttle between a first position in a first automated warehouse and a second position in said first automated warehouse.

According to an eighth aspect of the invention, an AMR is used to transfer a shuttle from or to an automated warehouse.

According to a ninth aspect of the invention, an AGV is used to transfer a shuttle from or to an automated warehouse.

### Brief Description of the Drawings

Fig. 1 to 3 illustrate schematically a side view of an automated warehouse according to the invention.
Fig. 4 to 6 illustrate schematically the situations of figure 1, 2 and 3 respectively, in a top view.
Fig. 7 illustrates schematically a to view of an AMR positioned in a pick-up station.

In the different figures, the same reference signs refer to the same or a similar feature.

### Detailed Description of Embodiment(s)

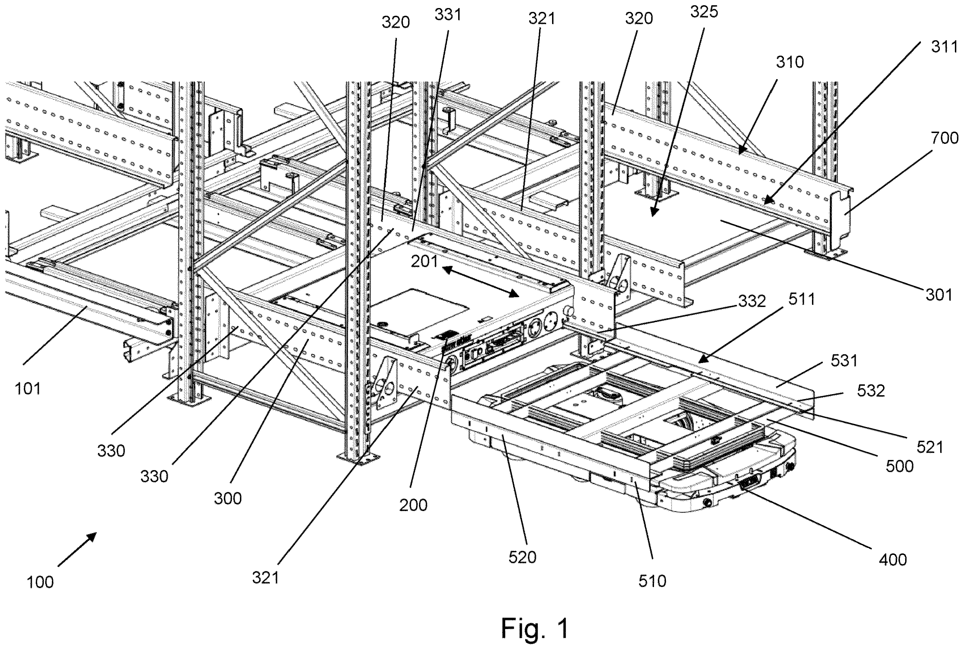

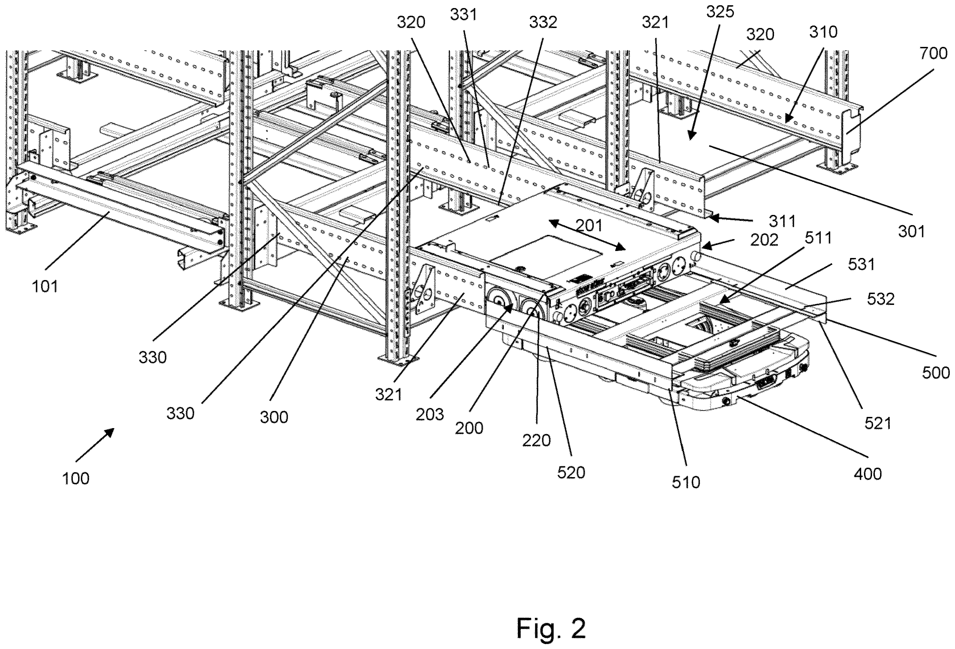

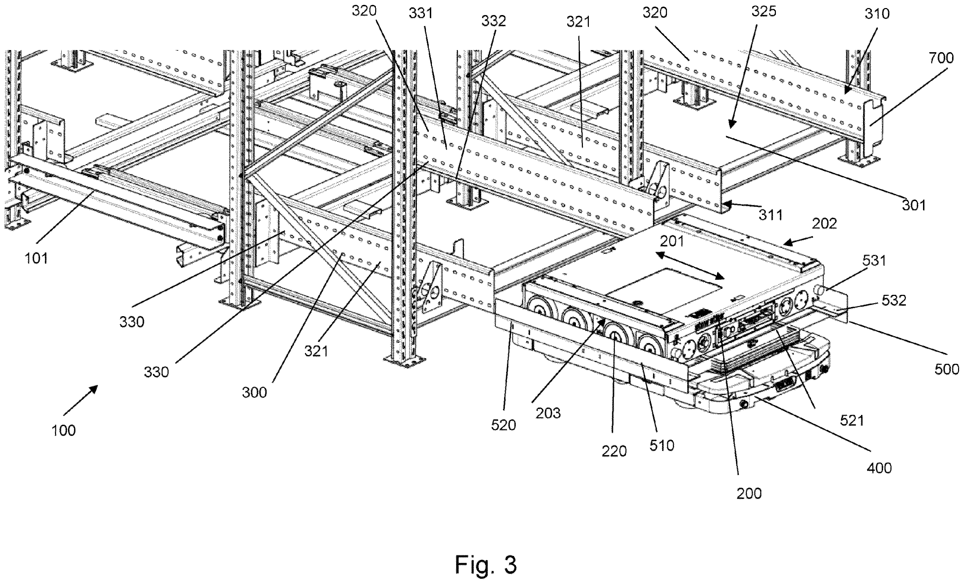

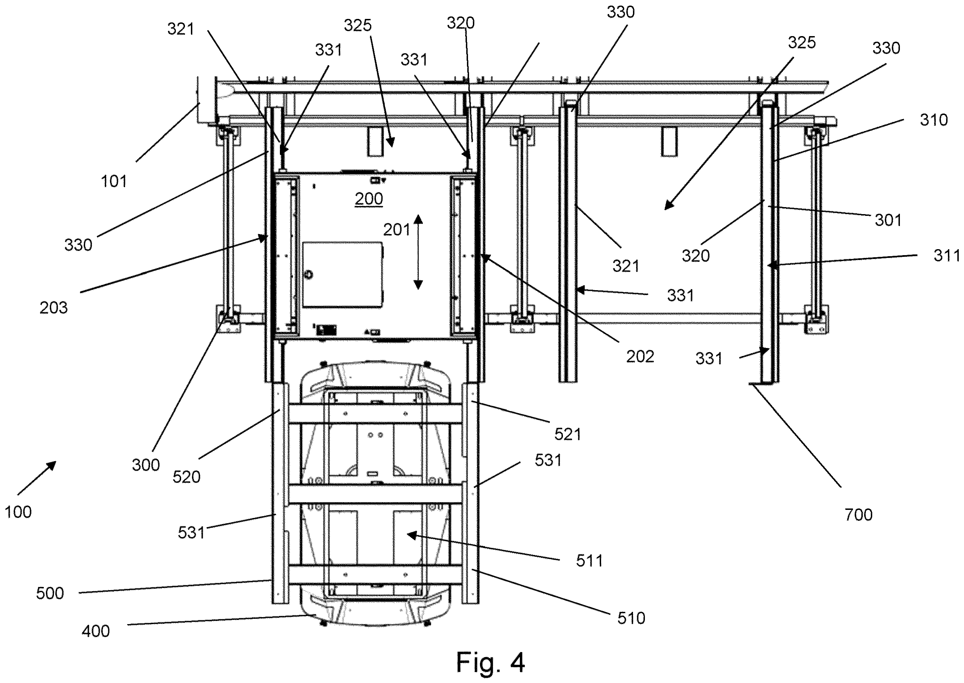

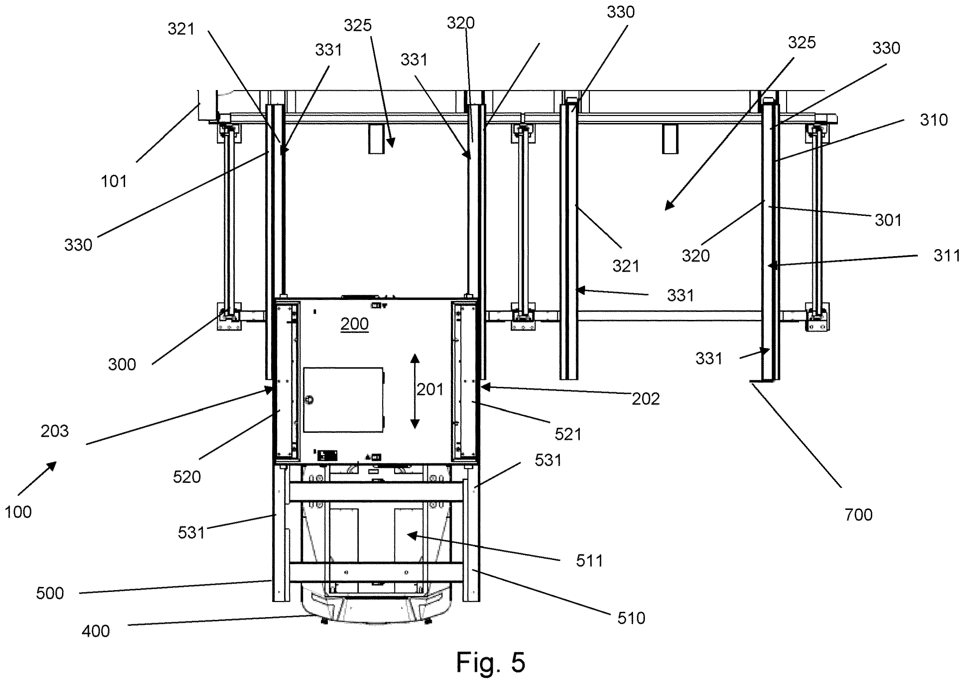

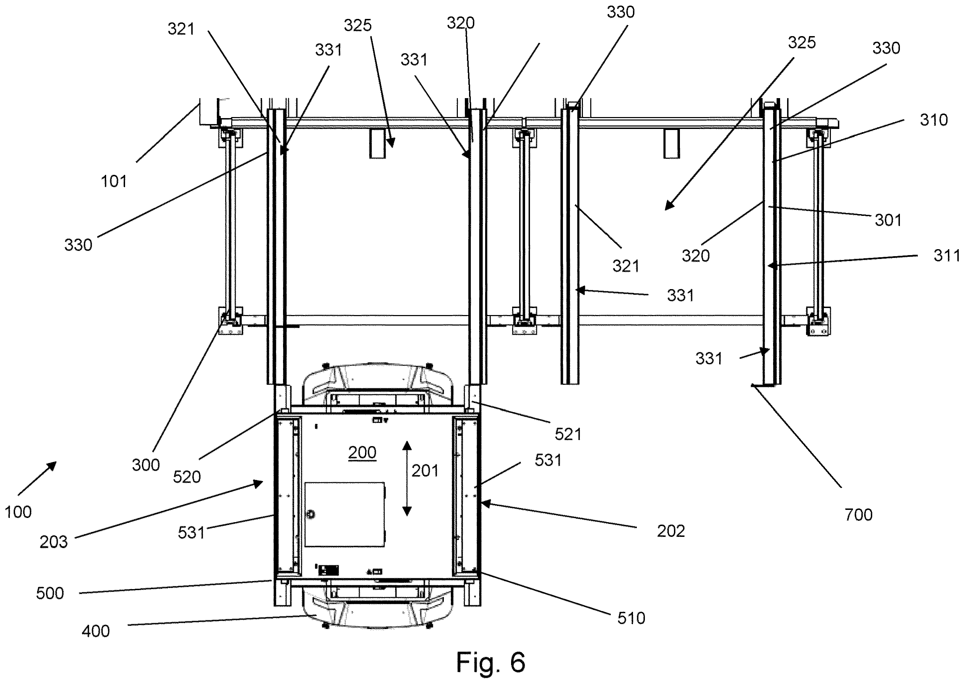

Fig. 1 to 6 illustrate schematically an automated warehouse according to the invention. In figures 1 and 4, the shuttle is completely present in the pick-up station. In figures 2 and 5, the shuttle is halfway the moving from the pick-up station onto the AMR. In figures 3 and 6, the shuttle has been transferred to the AMR.A racking system. The automated warehouse 100 comprises one or more shuttle 200 to transport payload in a racking system 101. The racking system 200 comprises one or more pick-up stations 300 and 301 adapted to have one or more shuttles being taken out and provided to the racking system 101 by means of an autonomous mobile robot 400 or AMR. Alternatively an autonomous guided vehicle may be used instead of the autonomous mobile robot 400. The pick-up stations comprise a shuttle support means 310 having a shuttle support surface 311, being large enough to support and store in the embodiment shown in figures 1 to 7, one shuttle 200. The shuttle support surface in this embodiment comprises two support strips 320 and 321 in longitudinal direction 201 of the shuttle 200 to be supported. The first support strip 320 is positioned along the first longitudinal side 202 of the shuttle, the second support strip 321 being positioned along the second longitudinal side 203 of the shuttle 200. Between the two support strips, an open space 325 is provided. The two support strips are adapted to support the driving means 220, like wheels, present along the longitudinal sides of the shuttle. The support strips are provided as part of profiled beams 330 having a profiled cross section. The cross section has a first flank 331 adapted to receive and carry the shuttle and has a second flank 332 oriented upwards in view of the first flank. As such the shuttle moving on the support strips, may be prevented to deviate from its driving direction towards one of the sides of the shuttle support means, thereby being in a possibility to drop of the shuttle support means.

The pick-up station 300 may comprises a skid to carry at least one shuttle in the pick-up station and during transportation by the AMR. Or the autonomous mobile robot, comprises said skid 500. These skids may be identical. The skid comprises a frame 510 with an upper side 511. The frame 510 comprising two rails 520 and 521 on its upper side, one rail at each of the longitudinal side of the frame. The rails are adapted to have a shuttle moving to and from the skid when contacting these rails. The rails 520 and 521 are provided as part of profiled beams having a profiled cross section. The cross section has a first flank 531 adapted to receive and carry the shuttle, and has a second flank 532 oriented upwards in view of the first flank. As such the shuttle moving on the skid, may be prevented to deviate from its driving direction towards one of the sides of the skid, thereby being in a possibility to drop of the skid.

To bring the shuttle 200 to the racking system 101, hence to the warehouse, the AMR 400, carrying the skid 500 and the shuttle 200 may be brought in front of the pick-up station 300. The height of the two rails 520 and 521 may be adapted by the AMR 400 lifting its top carrying surface, such the two rails 520 and 521 and the two support strips 320 and 321 are flush, and the corresponding strip and rail are aligned in longitudinal direction of the shuttle being carried. The shuttle may transfer from the skid 500 into the pick-up station 300 by moving in longitudinal direction on the rails and strips. To remove a shuttle from the pick-up station, the inverse movement takes place.

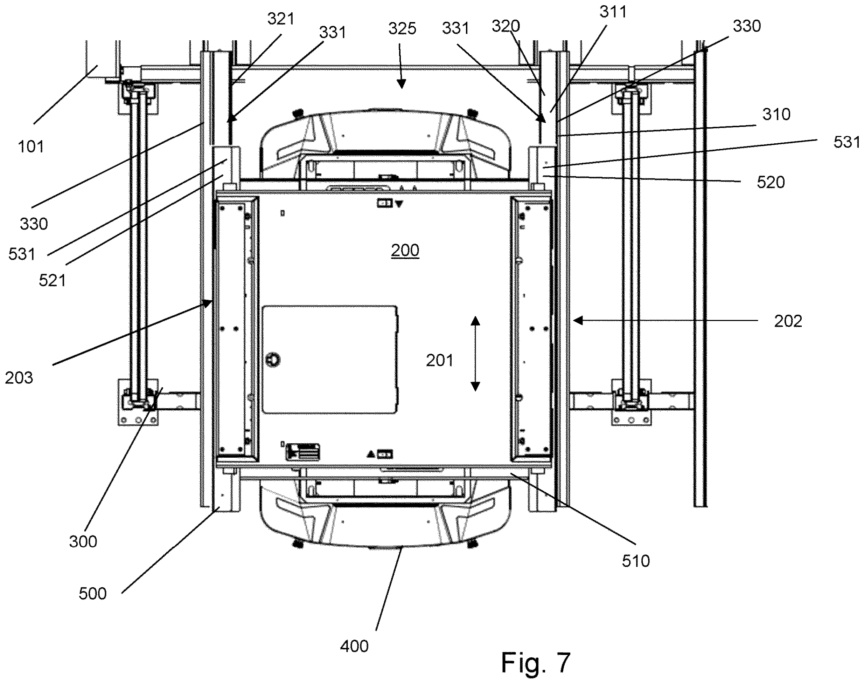

Alternatively, as shown in figure 7, the AMR drives into the pick-up station with the skid being lifted above the supporting means. To be able to perform such movement, the front side of the pick-up statin must be free of obstacles, different as shown in figures 1 to 6. The skid and the shuttle is brought above the supporting means, and the skid and shuttle is lower such that the skid is supported on the supporting means, the shuttle may thereafter move into the racking system of the warehouse from the skid. To remove a shuttle from the warehouse, the inverse movements take place.

One or more of the pick-up stations may be blocked by a movement restriction means 700, also referred to as backstop. This movement restriction means may be a simple plate to be mounted manually, as shown in figures 1 to 7, or may be an automatically activated, e.g. activated electrically, pneumatic, hydraulic or mechanically.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An automated warehouse comprising at least one shuttle to transport payload in a racking system of the automated warehouse, wherein said racking system comprises at least one pick-up station adapted to have said at least one shuttle being taken out and provided to the racking system by means of an autonomous mobile robot and/or an autonomous guided vehicle.

2. An automated warehouse according to claim 1, wherein the pick-up station comprises a shuttle support means having a shuttle support surface at a level different from ground level, said shuttle support surface is free of obstructions at the traverse side of the shuttle support means oriented outwards the automated warehouse.

3. An automated warehouse according to claim 2, wherein the shuttle support surface comprises two support strips in longitudinal direction of the shuttle to be supported, the first support strip being positioned along the first longitudinal side of the shuttle to be supported, the second support strip being positioned along the second longitudinal side of the shuttle to be supported, between the two support strips, an open space is provided.

4. An automated warehouse according to claim 1, wherein pick-up station comprises a skid to carry at least one shuttle in the pick-up station and during transportation by the AMR.

5. An automated warehouse according to claim 4, wherein the pick-up station comprises a skid support means adapted support the skid.

6. An automated warehouse according to any one of the claims 4 to 5, wherein the skid comprises a frame with an upper side, the frame comprising two rails on its upper side, one rail at each of the longitudinal side of the frame adapted to have the shuttle moving to and from the skid when contacting these rails.

7. An automated warehouse according to claim 6, wherein rails have a profiled cross section, the cross section having a first flank adapted to receive and carry the shuttle, the cross section having a second flank oriented upwards in view of the first flank.

8. An automated warehouse according to any one of the claims 6 to 7, wherein rails are positioned substantially coplanar with at least one horizontal track in the automated warehouse.

9. An automated warehouse according to any one of the claims 4 to 8, wherein said skid comprises a movement restriction means to prevent the shuttle to pass beyond the transverse side of the skid being furthest remote from the automated warehouse.

10. An automated warehouse according to any one of the claims 2 to 9, wherein the pick-up station comprises a void volume under the shuttle support surface or the skid support surface, said void volume at the traverse side of the void volume oriented outwards the automated warehouse is free of obstructions.

11. An automated warehouse according to any one of the claims 2 to 10, wherein the automated warehouse comprises an autonomous mobile robot, said robot comprising a skid, said skid comprising a frame with an upper side, said frame comprising two rails on its upper side, one rail at each of the longitudinal side of the frame adapted to have a shuttle moving to and from the skid when contacting said rails.

12. A method to transfer a shuttle from an automated warehouse, the method comprises
• providing an automated warehouse according to any one of the claims 1 to 10;
• drive an AMR or AGV into the pick-up station;
• exchange a shuttle between the AMR or AGV and the pick-up station;
• drive the AMR out of the pick-up station.

13. A method to transfer a shuttle to an automated warehouse, the method comprises
• providing an automated warehouse according to any one of the claims 1 to 10;
• providing an AMR according to claim 11;
• drive said AMR in front of the pick-up station such a shuttle is in a position to be loaded or unloaded to or from the skid on the AMR; and
• load or unload the shuttle to or from the skid on the AMR.

14. The use of a method according to one of the claims 12 to 13 for transferring a shuttle between a first automated warehouse and a maintenance zone, a second automated warehouse or a remote place from the first automated warehouse, or to move a shuttle between a first position in a first automated warehouse and a second position in said first automated warehouse.

15. The use of an AMR to transfer a shuttle from or to an automated warehouse.

16. The use of an AGV to transfer a shuttle from or to an automated warehouse.
